# EUROPÄISCHE PATENTSCHRIFT

(11) **EP 3 973 200 B1**
(45) Veröffentlichungstag und Bekanntmachung des Hinweises auf die Patenterteilung: **26.07.2023**
(21) Anmeldenummer: 20736243.5
(22) Anmeldetag: 19.05.2020
(51) Int. Cl.: F16C 17/10, F16C 25/02, F03D 80/70, F16C 35/063

(54) **GONDEL FÜR EINE WINDKRAFTANLAGE**
NACELLE FOR A WIND TURBINE
NACELLE POUR UNE ÉOLIENNE

(30) Priorität: 21.05.2019 AT 504652019
(43) Veröffentlichungstag der Anmeldung: 30.03.2022
(73) Patentinhaber: Miba Gleitlager Austria GmbH, 4663 Laakirchen (AT)
(72) Erfinder: HÖLZL, Johannes Sebastian, 4880 Berg im Attergau (AT)
(74) Vertreter: Burger, Hannes
(86) Internationale Anmeldenummer: PCT/AT2020/060206
(87) Internationale Veröffentlichungsnummer: WO 2020/232495

(56) Entgegenhaltungen:
- EP-A1- 3 290 751
- WO-A1-2018/071941
- DE-A1-102004 028 746
- DE-A1-102014 205 637
- DE-A1-102016 209 206
- DE-A1-102017 105 576
- US-A1- 2014 133 985

## Beschreibung

Die Erfindung betrifft eine Gondel für eine Windkraftanlage, sowie ein Verfahren zum Betreiben einer Windkraftanlage.

Aus der EP 2 863 076 A1 ist eine Rotorlagerung für eine Windkraftanlage bekannt, wobei eine Flexibilität der Gleitlagerpads vorgesehen ist, um deren Verschleiß auszugleichen.

Die aus der EP 2 863 076 A1 bekannte Rotorlagerung weist den Nachteil auf, dass die Lebensdauer der Gleitlagerpads nur gering ist.

Aus der US 2014133985 A1, der DE 102016209206 A1, der DE 102014205637 A1, der DE 102017105576 A1, der WO 2018/071941 A1, sowie der EP 3 290 751 A1 sind weitere Ausführungen von mehrteiligen Gleitlagerungen bekannt.

Aufgabe der vorliegenden Erfindung war es, die Nachteile des Standes der Technik zu überwinden und eine Gondel für eine Windkraftanlage zur Verfügung zu stellen, welche eine erhöhte Lebensdauer aufweist. Weiters soll ein Verfahren zum Betreiben der Windkraftanlage angegeben werden, mittels welchem die erhöhte Lebensdauer erreicht werden kann.

Diese Aufgabe wird durch eine Vorrichtung und ein Verfahren gemäß den Ansprüchen gelöst.

Erfindungsgemäß ist eine Gondel für eine Windkraftanlage ausgebildet. Die Gondel umfasst:
- ein Gondelgehäuse;
- eine Rotornabe;
- eine Rotorlagerung zur Lagerung der Rotornabe am Gondelgehäuse, wobei die Rotorlagerung zumindest ein inneres Ringelement und zumindest ein äußeres Ringelement aufweist, wobei zwischen den beiden Ringelementen ein erstes Gleitlagerelement und ein zweites Gleitlagerelement angeordnet sind. Weiters ist ein Lagerspieleinstellmittel ausgebildet, mittels welchem ein Lagerspiel zwischen dem Gleitlagerelement und dem damit zusammenwirkenden Ringelement einstellbar ist.

Die erfindungsgemäße Gondel bringt den überraschenden Vorteil mit sich, dass durch das erfindungsgemäße Lagerspieleinstellmittel und das damit ermöglichte, gezielte Einstellen des Lagerspiels, der Verschleiß der Gleitlagerelemente drastisch reduziert werden kann. Dieser überraschende Effekt wird darauf zurückgeführt, dass sich nur bei einem optimal eingestellten Lagerspiel eine gute Gleitlagerwirkung zwischen dem Gleitlagerelement und dem damit zusammenwirkenden Ringelement ausbilden kann.

Erfindungsgemäß ist das Ringelement axial in ein erstes Ringelementteil und ein zweites Ringelementteil geteilt ausgebildet, wobei das erste Ringelementteil und das zweite Ringelementteil mittels des Lagerspieleinstellmittels in Axialrichtung relativ zueinander verschiebbar sind. Besonders bei einer derartigen Ausführung lässt sich das Lagerspiel überraschend gut und präzise einstellen.

Ferner ist vorgesehen, dass das Lagerspieleinstellmittel eine Wellenmutter als Axialsicherungsring umfasst. Besonders mittels einer Wellenmutter lässt sich der Axialabstand der beiden Ringelementteile zueinander präzise einstellen.

Weiters ist erfindungsgemäß vorgesehen, dass sowohl das innere Ringelement als auch das äußere Ringelement V-förmig ausgebildet sind und das erste Gleitlagerelement und das zweite Gleitlagerelement zwischen den beiden Ringelementen axial zueinander beabstandet angeordnet sind, wobei die beiden Gleitlagerelemente im Querschnitt gesehen in einem Winkel zueinander angeordnet sind. Besonders bei V-Förmig ausgebildeten Ringelementen bringt es überraschende Vorteile in der Lebensdauer der Gleitlagerelemente mit sich, wenn sich das Lagerspiel einstellen lässt.

Weiters ist erfindungsgemäß vorgesehen, dass das Lagerspieleinstellmittel ein Federelement umfasst, mittels welchem das erste Ringelementteil und das zweite Ringelementteil in Axialrichtung relativ zueinander verschiebbar sind. Mittels des Federelements kann das Lagerspiel ständig in einem vorbestimmten Wertebereich gehalten werden, wodurch der Verschleiß der Gleitlager sofort ausgeglichen werden kann. Das Federelement kann beispielsweise mit einem Bauteil gekoppelt sein, welches in Axialrichtung nicht verschiebbar ist, da die Einstellung des Lagerspiels durch das Federelement übernommen werden kann.

Erfindungsgemäß umfasst das Lagerspieleinstellmittel das Federelement und den die Wellenmutter als Axialsicherungsring. Durch diese Kombination kann mittels des Federelements das Lagerspiel ständig in einem vorbestimmten Wertebereich gehalten werden und in periodischen Abständen der Axialsicherungsring nachgestellt werden, um den erzielbaren Wertebereich des Federelementes wieder anpassen zu können.

Darüber hinaus kann vorgesehen sein, dass das Gleitlagerelement mehrere einzelne Gleitlagerpads umfasst, welche über den Umfang verteilt angeordnet sind wobei je Gleitlagerpad ein Lagerspieleinstellmittel ausgebildet ist, mittels welchem das Lagerspiel jedes einzelnen Gleitlagerpads einstellbar ist. Diese Maßnahmen bringen ebenfalls eine überraschend lange Lebensdauer der Gleitlagerelemente mit sich. Dies bringt zusätzlich den Vorteil mit sich, dass das Lagerspiel für jedes einzelne der Lagerpads unabhängig voneinander eingestellt werden kann, wodurch eine weitere Erhöhung der Lebensdauer der Gleitlagerelemente erreicht werden kann. Insbesondere können dadurch lokale Belastungszonen, welche sich aufgrund der auftretenden Kräfte und Kippmomente ergeben, in den Lagerspieleinstellungen berücksichtigt werden.

Vorteilhaft ist auch eine Ausprägung, gemäß welcher vorgesehen sein kann, dass das Lagerspieleinstellmittel mit einem Lagerspieleinstellaktor gekoppelt ist, mittels welchem das Lagerspiel automatisiert einstellbar ist. Durch diese Maßnahme ist es nicht notwendig, dass das Lagerspieleinstellmittel manuell eingestellt wird, wodurch die Genauigkeit der Lagerspieleinstellung verbessert werden kann, was ebenfalls zu einer Erhöhung der Lebensdauer der Gleitlagerelemente führt. Darüber hinaus kann durch die automatisierte Einstellung des Lagerspieles etwaig auftretende Verschleiß in den Gleitlagerelementen auch während dem Betrieb der Windkraftanlage ausgeglichen werden.

Der Lagerspieleinstellaktor kann durch externe Energiezuführung aktiv angesteuert werden.

In einer alternativen Ausführungsvariante kann auch vorgesehen sein, dass der Lagerspieleinstellaktor beispielsweise über ein Getriebe mit der Rotorwelle oder mit der Rotornabe gekoppelt ist und dass das Lagerspieleinstellmittel auf Basis der bereits absolvierten Rotorumdrehungen eingestellt wird.

Gemäß einer Weiterbildung ist es möglich, dass ein Lagerspielerfassungsmittel ausgebildet ist, mittels welchem das Lagerspiel erfassbar ist. Dies bringt den Vorteil mit sich, dass das tatsächlich anliegende Lagerspiel auch während dem Betrieb der Windkraftanlage erfasst werden kann und beim Abweichen von Vorgabewerten entsprechend eine Aktion gesetzt werden kann.

Das Lagerspielerfassungsmittel kann beispielsweise in Form eines Abstandssensors ausgebildet sein. Insbesondere kann vorgesehen sein, dass das Lagerspielerfassungsmittel in Form eines Induktivsensors, in Form eines Hallsensors, oder etwa in Form eines optischen Abstandssensors ausgebildet ist.

Insbesondere kann vorgesehen sein, dass das Lagerspielerfassungsmittel an einer Stelle in der Rotorlagerung angeordnet ist, welche im Betrieb der Windkraftanlage aufgrund es anliegenden Kippmomentes nicht belastet ist. Durch diese Maßnahme kann das tatsächlich anliegende Lagerspiel überraschend gut erfasst werden.

Weiters ist erfindungsgemäß ein Verfahren zum Betreiben einer Windkraftanlage vorgesehen, wobei eine Gondel der Windkraftanlage eine Rotorlagerung mit zumindest einem inneren Ringelement und zumindest einem äußeren Ringelement aufweist, wobei zwischen den beiden Ringelementen ein erstes Gleitlagerelement und ein zweites Gleitlagerelement angeordnet sind. Beim Zusammenbau der Rotorlagerung wird ein Lagerspiel zwischen dem Gleitlagerelement und dem damit zusammenwirkenden Ringelement mittels eines Lagerspieleinstellmittels eingestellt. Als Zusammenbau der Rotorlagerung werden alle Schritte gesehen, welche vor einem Normalbetrieb der Windkraftanlage erfolgen. Insbesondere kann vorgesehen sein, dass das Lagerspiel erst nach einem Testbetrieb der Windkraftanlage oder nach einer Einlaufphase eingestellt wird, wobei sowohl das innere Ringelement als auch das äußere Ringelement V-förmig ausgebildet sind und das erste Gleitlagerelement und das zweite Gleitlagerelement zwischen den beiden Ringelementen axial zueinander beabstandet angeordnet werden, wobei die beiden Gleitlagerelemente im Querschnitt gesehen in einem Winkel zueinander angeordnet werden, wobei das Ringelement axial in ein erstes Ringelementteil und ein zweites Ringelementteil geteilt ausgebildet ist, wobei das erste Ringelementteil und das zweite Ringelementteil mittels dem Lagerspieleinstellmittel in Axialrichtung relativ zueinander verschoben werden, wobei das Lagerspieleinstellmittel ein Federelement und eine Wellenmutter umfasst, mittels welchem das erste Ringelementteil und das zweite Ringelementteil in Axialrichtung relativ zueinander verschoben werden, wobei das Federelement zwischen der Wellenmutter und dem ersten Ringelementteil angeordnet ist.

Das erfindungsgemäße Verfahren bringt den Vorteil mit sich, dass eine derart betriebene Windkraftanlage eine besonders hohe Lebensdauer der Gleitlagerelemente aufweist.

Darüber hinaus kann vorgesehen sein, dass das Lagerspiel in periodischen Abständen, insbesondere im Wartungsintervall, mittels des Lagerspieleinstellmittels nachgestellt wird. Durch diese Maßnahme kann ein Verschleiß der Gleitlagerelemente ausgeglichen werden.

Weiters kann vorgesehen sein, dass das Lagerspiel mittels eines Lagerspielerfassungsmittels erfasst wird, wobei bei Erreichen eines bestimmten Lagerspielwertes ein Lagerspieleinstellmittel automatisiert das Lagerspiel nachstellt.

Gemäß einer besonderen Ausprägung ist es möglich, dass das Lagerspiel mittels eines Lagerspielerfassungsmittels erfasst wird, wobei bei Erreichen eines bestimmten Lagerspielwertes ein Wartungssignal ausgegeben wird. Ein derartiges Wartungssignal kann beispielsweise eine Nachricht sein, welche an ein Servicecenter oder einen Servicetechniker übermittelt wird. Weiters ist es auch denkbar, dass das Wartungssignal nur bei aktiver Abfrage der Betriebszustandsdaten der entsprechenden Windkraftanlage angezeigt wird.

Eine Gondel im Sinne dieses Dokumentes umfasst neben einem Gondelgehäuse auch eine Rotornabe und eine Rotorlagerung zur Lagerung der Rotornabe.

Das innere Ringelement bzw. das äußere Ringelement können jeweils als eigenständige Bauteile ausgebildet sein, welche mit der Rotornabe oder Rotorwelle bzw. mit dem Gondelgehäuse gekoppelt sein können. Alternativ dazu ist es auch denkbar, dass das innere Ringelement als integraler Bestandteil der Rotornabe bzw. der Rotorwelle ausgebildet ist. Alternativ dazu ist es auch denkbar, dass das äußere Ringelement als integraler Bestandteil der Rotornabe bzw. der Rotorwelle ausgebildet ist. Alternativ dazu ist es auch denkbar, dass das innere Ringelement als integraler Bestandteil des Gondelgehäuses ausgebildet ist. Alternativ dazu ist es auch denkbar, dass das äußere Ringelement als integraler Bestandteil des Gondelgehäuses ausgebildet ist.

Als Lagerspiel im Sinne dieses Dokumentes wird nicht nur das Vorhandensein eines Abstandes gesehen, sondern wird im weitesten Sinne eine Vorspannung der Gleitlager als negatives Lagerspiel gesehen. Wenn die Gleitflächen des Gleitlagers am damit korrespondierenden Ringelement anliegen, ohne dabei eine Kraft auf diese auszuüben ist das Lagerspiel somit null. Somit ist im Schutzumfang auch ein Lagerspieleinstellmittel umfasst, mittels welchem eine vordefinierte oder vordefinierbare Verspannung oder Vorspannung der Rotorlagerung, insbesondere eine Anpresskraft der Gleitfläche der Gleitlager, eingestellt werden kann.

Das Lagerspieleinstellmittel umfasst eine Wellenmutter und ein Federelement, mittels welchem das Lagerspiel kraftabhängig eingestellt werden kann und mittels welchem aufgrund seiner Flexibilität das Lagerspiel in einem gewissen Bereich eingestellt werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Windkraftanlage;
- Fig. 2: ein Querschnitt einer Gondel in einer stark schematischen Darstellung;
- Fig. 3: eine Schnittansicht gemäß der Schnittlinie III - III aus Fig. 3;
- Fig. 4: eine Detailansicht des Details x aus Fig. 2;
- Fig. 5: eine Querschnittansicht eines erfindungsgemäßen Ausführungsbeispiels einer Rotorlagerung

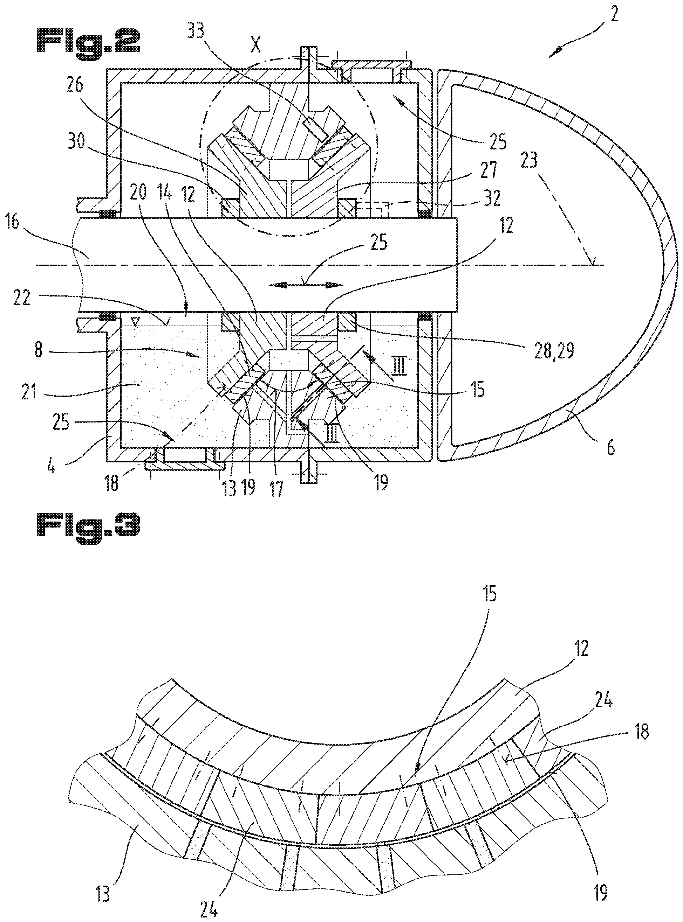

Bei den Ausführungsbeispielen der Figuren 2 bis 4 handelt es nicht um einen Teil der Erfindung, sondern um einen Stand der Technik, der das Verständnis der Erfindung erleichtert.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

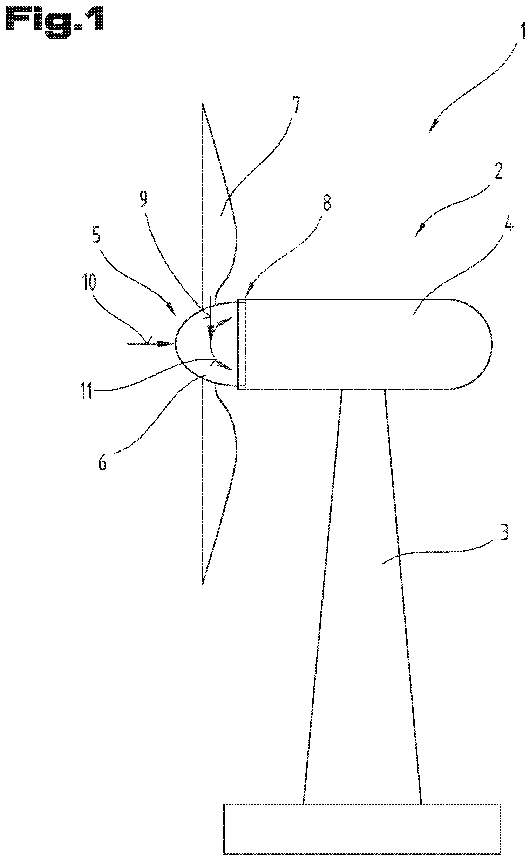

Fig. 1 zeigt eine schematische Darstellung einer Windkraftanlage 1 zum Erzeugen von elektrischer Energie aus Windenergie. Die Windkraftanlage 1 umfasst eine Gondel 2, welche an einem Turm 3 drehbar aufgenommen ist. Die Gondel 2 umfasst ein Gondelgehäuse 4, welches die Hauptstruktur der Gondel 2 bildet. Im Gondelgehäuse 4 der Gondel 2 sind die elektrotechnischen Komponenten wie etwa ein Generator der Windkraftanlage 1 angeordnet.

Weiters ist ein Rotor 5 ausgebildet, welcher eine Rotornabe 6 mit daran angeordneten Rotorblättern 7 aufweist. Die Rotornabe 6 wird als Teil der Gondel 2 gesehen. Die Rotornabe 6 ist mittels einer Rotorlagerung 8 drehbeweglich am Gondelgehäuse 4 aufgenommen.

Die Rotorlagerung 8, welche zur Lagerung der Rotornabe 6 am Gondelgehäuse 4 der Gondel 2 dient, ist zur Aufnahme einer Radialkraft 9, einer Axialkraft 10 und eines Kippmomentes 11 ausgebildet. Die Axialkraft 10 ist bedingt durch die Kraft des Windes. Die Radialkraft 9 ist bedingt durch die Gewichtskraft des Rotors 5 und greift am Schwerpunkt des Rotors 5 an. Da der Schwerpunkt des Rotors 5 außerhalb der Rotorlagerung 8 liegt, wird in der Rotorlagerung 8 durch die Radialkraft 9 das Kippmoment 11 hervorgerufen. Das Kippmoment 11 kann ebenfalls durch eine ungleichmäßige Belastung der Rotorblätter 7 hervorgerufen werden.

Die erfindungsgemäße Rotorlagerung 8 kann beispielsweise einen Durchmesser zwischen 0,5 m und 5 m aufweisen. Natürlich ist es auch denkbar, dass die Rotorlagerung 8 kleiner oder größer ist.

In Fig. 2 ist das Gondelgehäuse 4 und die Rotornabe 6 in einer schematischen Schnittdarstellung dargestellt, wobei der Aufbau, insbesondere in dessen Dimensionierung stark schematisiert wurde. Wie aus Fig. 2 ersichtlich, kann vorgesehen sein, dass die Rotorlagerung 8 zumindest ein inneres Ringelement 12 und zumindest ein äußeres Ringelement 13 aufweist. Zwischen dem inneren Ringelement 12 und dem äußeren Ringelement 13 ist zumindest ein Gleitlagerelement 14, 15 angeordnet. Insbesondere kann vorgesehen sein, dass zwischen dem inneren Ringelement 12 und dem äußeren Ringelement 13 ein erstes Gleitlagerelement 14 und ein zweites Gleitlagerelement 15 angeordnet ist.

Wie aus Fig. 2 ersichtlich, kann vorgesehen sein, dass das innere Ringelement 12 mit der Rotornabe 6 gekoppelt ist. Insbesondere kann vorgesehen sein, dass eine Rotorwelle 16 ausgebildet ist, an welcher die Rotornabe 6 angeordnet ist. Das innere Ringelement 12 kann direkt an der Rotorwelle 16 aufgenommen sein.

In einem weiteren, nicht dargestellten Ausführungsbeispiel kann natürlich auch vorgesehen sein, dass das innere Ringelement 12 direkt an der Rotornabe 6 aufgenommen ist.

In wieder einem weiteren, nicht dargestellten Ausführungsbeispiel kann natürlich auch vorgesehen sein, dass das innere Ringelement 12 am Gondelgehäuse 4 befestigt ist, und dass die Rotornabe 6 mit dem äußeren Ringelement 13 gekoppelt ist.

Wie aus Fig. 2 ersichtlich, kann vorgesehen sein, dass sowohl das innere Ringelement 12 als auch das äußere Ringelement 13 V-förmig ausgebildet sind und jeweils an der V-förmigen Flanke zwischen den beiden Ringelementen 12, 13 axial zueinander beabstandet die zwei Gleitlagerelemente 14, 15 ausgebildet sind.

Insbesondere kann vorgesehen sein, dass die beiden Gleitlagerelemente 14, 15 in einem Winkel 17 zueinander angeordnet sind. Wie aus Fig. 2 ersichtlich, kann in einem Ausführungsbeispiel vorgesehen sein, dass die Gleitlagerelemente 14, 15 mittels Befestigungsmittel 18 am inneren Ringelement 12 befestigt sind. Somit kann zwischen den Gleitlagerelementen 14, 15 und dem äußeren Ringelement 13 eine Gleitfläche 19 ausgebildet sein. Bei einer Anordnung der Gleitlagerelemente 14, 15, wie sie in Fig. 2 dargestellt ist, können die Gleitflächen 19 ebenfalls V-förmig angeordnet sein.

Wie aus Fig. 2 ebenfalls ersichtlich, kann vorgesehen sein, dass das innere Ringelement 12 in Axialrichtung 25 gesehen in ein erstes Ringelementteil 26 und ein zweites Ringelementteil 27 geteilt ausgeführt ist, um den Zusammenbau der Rotorlagerung 8 zu erleichtern.

In einem nicht dargestellten Ausführungsbeispiel ist es natürlich auch denkbar, dass das innere Ringelement 12 nicht wie im in Fig. 2 dargestellten Ausführungsbeispiel eine V-Förmige Nut bildet, sondern die V-Förmige Anordnung umgekehrt ausgebildet ist, sodass am inneren Ringelement 12 ein V-Förmiger Vorsprung ausgebildet ist. In diesem Fall kann zum leichteren Zusammenbau vorgesehen sein, dass das äußere Ringelement 13 in Axialrichtung 25 gesehen in das erste Ringelementteil 26 und das zweite Ringelementteil 27 geteilt ausgeführt ist.

Sowohl bei einer Ausführung mit in Axialrichtung 25 geteiltem inneren Ringelement 12, als auch bei einer Ausführung mit in Axialrichtung 25 geteiltem äußeren Ringelement 13 kann vorgesehen sein, dass das erste Ringelementteil 26 und das zweite Ringelementteil 27 des Ringelementes 12, 13 in Axialrichtung 25 zueinander verstellbar ausgebildet sind, um beispielsweise den Verschleiß der Gleitlagerelemente 14, 15 kompensieren zu können. Hierzu ist ein Lagerspieleinstellmittel 28 vorgesehen, mittels welchem das erste Ringelementteil 26 und/oder das zweite Ringelementteil 27 in Axialrichtung 25 relativ zueinander verschiebbar sind, wodurch ein Lagerspiel 31 zwischen dem Gleitlagerelement 14, 15 und dem mit diesem zusammenwirkenden Ringelement 12, 13 einstellbar ist.

Wie aus Fig. 2 ersichtlich, kann vorgesehen sein, dass das Lagerspieleinstellmittel 28 in Form einer Wellenmutter 29 ausgebildet ist, mittels welcher der Abstand der beiden Ringelementteile 26, 27 zueinander eingestellt werden kann. Insbesondere kann vorgesehen sein, dass ein Anschlagelement 30 ausgebildet ist, welches als Gegenanschlag für das Lagerspieleinstellmittel 28 dient. Mit anderen Worten ausgedrückt, kann das erste Ringelementteil 26 und das zweite Ringelementteil 27 zwischen dem Anschlagelement 30 und dem Lagerspieleinstellmittel 28 aufgenommen sein.

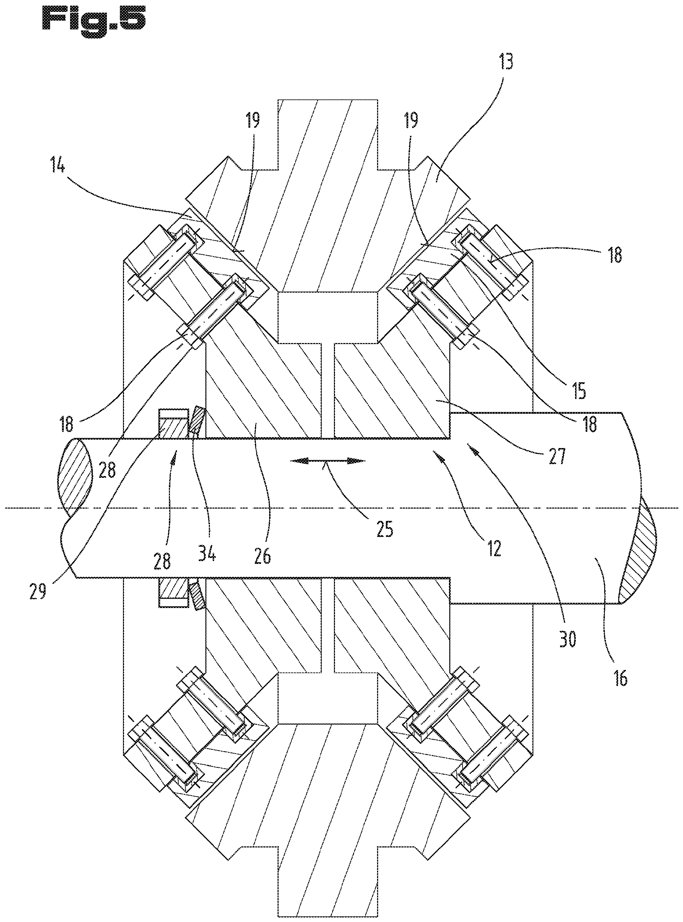

Das Anschlagelement 30 kann, wie in Fig. 2 dargestellt, durch ein eigenständiges Bauteil gebildet sein, welches starr an der Rotorwelle 16 befestigt ist. In einem weiteren, in Fig. 5 dargestellten Ausführungsbeispiel kann auch vorgesehen sein, dass die Rotorwelle 16 einen Absatz aufweist, welcher als Anschlagelement 30 dient. In wieder einem anderen Ausführungsbeispiel kann auch vorgesehen sein, dass das zweite Ringelementteil 27 beispielsweise mittels einer stoffschlüssigen Verbindung fest mit der Rotorwelle 16 verbunden ist und somit kein eigenes Anschlagelement 30 benötigt wird.

Insbesondere kann vorgesehen sein, dass bei der erstmaligen Montage die Rotorlagerung 8 das Lagerspiel 31 entsprechend den Vorgaben eingestellt wird. Weiters kann vorgesehen sein, dass das Lagerspiel 31 in einem regelmäßigen Zeitintervall nachgestellt wird, um den Verschleiß der Gleitlagerelemente 14, 15 zu kompensieren. In einer Weiterbildung kann auch vorgesehen sein, dass ein Lagerspieleinstellaktor 32 ausgebildet ist, mittels welchem das Lagerspieleinstellmittel 28 bewegbar ist und somit das Lagerspiel 31 automatisiert ein- bzw. nachstellbar ist.

In einer Weiterbildung kann vorgesehen sein, dass ein Lagerspielerfassungsmittel 33 vorgesehen ist, mittels welchem das aktuell vorliegende Lagerspiel 31 erfassbar ist.

Insbesondere kann vorgesehen sein, dass der Lagerspieleinstellaktor 32 und das Lagerspielerfassungsmittel 33 mit einer Recheneinheit gekoppelt sind, wodurch der Lagerspieleinstellaktor 32 auf Basis der durch das Lagerspielerfassungsmittel 33 gewonnenen Information das Lagerspieleinstellmittel 28 verstellt, um ein vorgegebenes bzw. vorgebbares Lagerspiel 31 zu erreichen.

Wie aus Fig. 2 weiters ersichtlich, kann vorgesehen sein, dass ein Schmierölsumpf 20 ausgebildet ist, welcher zur Aufnahme von Schmieröl 21 dient. Im Betriebszustand kann der Schmierölsumpf 20 bis zu einem Schmierölniveau 22 mit Schmieröl 21 befüllt sein. Das Schmierölniveau 22 ist hierbei so gewählt, dass die Gleitflächen 19 zumindest abschnittsweise unterhalb des Schmierölniveaus 22 liegen und somit in das im Schmierölsumpf 20 befindliche Schmieröl 21 eintauchen.

Insbesondere kann vorgesehen sein, dass die Gleitlagerelemente 14, 15 um eine Rotorachse 23 herum angeordnet sind.

Fig. 3 zeigt eine Schnittansicht gemäß der Schnittlinie III - III aus Fig. 3.

Wie aus Fig. 3 ersichtlich, kann vorgesehen sein, dass das Gleitlagerelement 14, 15 mehrere Gleitlagerpads 24 aufweist, welche über den Umfang verteilt angeordnet sind. Die einzelnen Gleitlagerpads 24 können mittels der Befestigungsmittel 18 mit dem inneren Ringelement 12 gekoppelt bzw. an diesem befestigt sein. Insbesondere kann vorgesehen sein, dass die einzelnen Gleitlagerpads 24 mittels der Befestigungsmittel 18 unabhängig voneinander vom inneren Ringelement 12 lösbar sind.

Weiters kann auch vorgesehen sein, dass die Befestigungsmittel 18 gleichzeitig als Lagerspieleinstellmittel 28 wirken und somit das Lagerspiel 31 für jedes der einzelnen Gleitlagerpads 24 einzeln und unabhängig voneinander eingestellt werden kann.

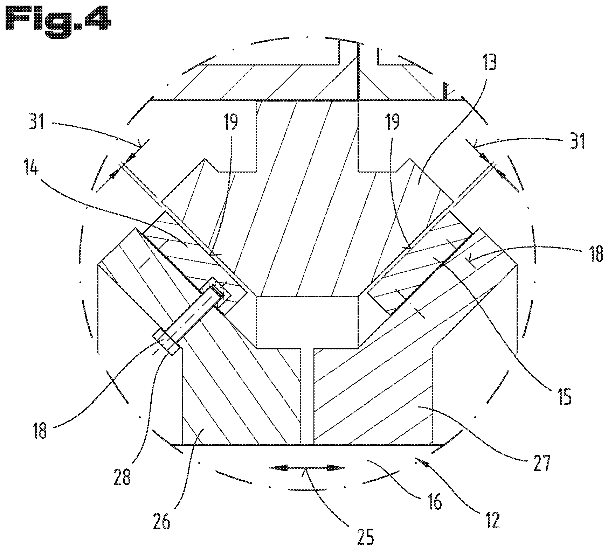

Fig. 4 zeigt eine Detailansicht des Details x aus Fig. 2.

Wie aus Fig. 4 gut ersichtlich, kann vorgesehen sein, dass das erste Gleitlagerelement 14 am ersten Ringelementteil 26 befestigt ist und dass das zweite Gleitlagerelement 15 am zweiten Ringelementteil 27 des inneren Ringelementes 12 befestigt ist. Die Gleitflächen 19 der Gleitlagerelemente 14, 15 können somit dem äußeren Ringelement 13 zugewandt sein. Im Betrieb der Windkraftanlage 1 können somit die Gleitflächen 19 der Gleitlagerelemente 14, 15 am äußeren Ringelement 13 gleiten. Wie aus Fig. 4 weiters ersichtlich, kann vorgesehen sein, dass im unbelasteten Idealzustand der Rotorlagerung 8 zwischen der Gleitfläche 19 und dem äußeren Ringelement 13 das Lagerspiel 31 ausgebildet ist. Das Lagerspiel 31 kann, wie aus Fig. 4 ersichtlich, tatsächlich in Form eines Abstandes ausgebildet sein. In einem weiteren Ausführungsbeispiel kann auch vorgesehen sein, dass im unbelasteten Idealzustand die Gleitfläche 19 am äußeren Ringelement 13 anliegt und das Lagerspiel 31 ein Maß für die Vorspannung bzw. den Anpressdruck des Gleitlagerelementes 14, 15 am äußeren Ringelement 13 darstellt.

Das tatsächlich im Einsatz befindende Gleitlagerelement 14, 15 wird natürlich durch die in der Windkraftanlage 1 wirkenden Kräfte, wie etwa die Radialkraft 9, die Axialkraft 10 oder das Kippmoment 11 belastet. Somit kann das tatsächliche Lagerspiel 31 an den beiden Gleitlagerelementen 14, 15 oder auch innerhalb eines der Gleitlagerelemente 14, 15 unterschiedlich groß sein.

Wie aus Fig. 4 ersichtlich, können die Befestigungsmittel 18 gleichzeitig als Lagerspieleinstellmittel 28 wirken, wodurch die Position der Gleitlagerelemente 14, 15 relativ zu dem inneren Ringelement 12 eingestellt werden kann, wodurch das Lagerspiel 31 einstellbar ist.

In der Fig. 5 ist eine erfindungsgemäße Ausführungsform der Rotorlagerung 8 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, umfasst das Lagerspieleinstellmittel 28 ein Federelement 34, welches zwischen der Wellenmutter 29 und den Ringelementteilen 26, 27 angeordnet ist. Mittels des Federelementes 34 kann der Verschleiß der Gleitlagerelemente 14, 15 unmittelbar ausgeglichen werden. Mittels des Federelementes 34 kann zusätzlich erreicht werden, dass die Gleitflächen 19 der Gleitlagerelemente 14, 15 mit einer vorbestimmten Anpresskraft am äußeren Ringelement 13 anliegen.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Windkraftanlage | 31 | Lagerspiel |
| 2 | Gondel | 32 | Lagerspieleinstellaktor |
| 3 | Turm | 33 | Lagerspielerfassungsmittel |
| 4 | Gondelgehäuse | 34 | Federelement |
| 5 | Rotor | | |
| 6 | Rotornabe | | |
| 7 | Rotorblatt | | |
| 8 | Rotorlagerung | | |
| 9 | Radialkraft | | |
| 10 | Axialkraft | | |
| 11 | Kippmoment | | |
| 12 | inneres Ringelement | | |
| 13 | äußeres Ringelement | | |
| 14 | erstes Gleitlagerelement | | |
| 15 | zweites Gleitlagerelement | | |
| 16 | Rotorwelle | | |
| 17 | Winkel | | |
| 18 | Befestigungsmittel | | |
| 19 | Gleitfläche | | |
| 20 | Schmierölsumpf | | |
| 21 | Schmieröl | | |
| 22 | Schmierölniveau | | |
| 23 | Rotorachse | | |
| 24 | Gleitlagerpad | | |
| 25 | Axialrichtung | | |
| 26 | erstes Ringelementteil | | |
| 27 | zweites Ringelementteil | | |
| 28 | Lagerspieleinstellmittel | | |
| 29 | Wellenmutter | | |
| 30 | Anschlagelement | | |

## Patentansprüche

1. Gondel (2) für eine Windkraftanlage (1), die Gondel (2) umfassend:
- ein Gondelgehäuse (4);
- eine Rotornabe (6);
- eine Rotorlagerung (8) zur Lagerung der Rotornabe (6) am Gondelgehäuse (4), wobei die Rotorlagerung (8) zumindest ein inneres Ringelement (12) und zumindest ein äußeres Ringelement (13) aufweist, wobei zwischen den beiden Ringelementen (12, 13) ein erstes Gleitlagerelement (14) und ein zweites Gleitlagerelement (15) angeordnet sind,
wobei ein Lagerspieleinstellmittel (28) ausgebildet ist, mittels welchem ein Lagerspiel (31) zwischen dem Gleitlagerelement (14, 15) und dem damit zusammenwirkenden Ringelement (12, 13) einstellbar ist, wobei sowohl das innere Ringelement (12) als auch das äußere Ringelement (13) V-förmig ausgebildet sind und das erste Gleitlagerelement (14) und das zweite Gleitlagerelement (15) zwischen den beiden Ringelementen (12, 13) axial zueinander beabstandet angeordnet sind, wobei die beiden Gleitlagerelemente (14, 15) im Querschnitt gesehen in einem Winkel (17) zueinander angeordnet sind, wobei das Ringelement (12, 13) axial in ein erstes Ringelementteil (26) und ein zweites Ringelementteil (27) geteilt ausgebildet ist, **dadurch gekennzeichnet, dass** das erste Ringelementteil (26) und das zweite Ringelementteil (27) mittels dem Lagerspieleinstellmittel (28) in Axialrichtung (25) relativ zueinander verschiebbar sind, wobei das Lagerspieleinstellmittel (28) ein Federelement (34) und eine Wellenmutter (29) umfasst, mittels welchem das erste Ringelementteil (26) und das zweite Ringelementteil (27) in Axialrichtung relativ zueinander verschiebbar sind, wobei das Federelement (34) zwischen der Wellenmutter (29) und dem ersten Ringelementteil (26) angeordnet ist.

2. Gondel (2) nach Anspruch 1, **dadurch gekennzeichnet, dass** das Gleitlagerelement (14, 15) mehrere einzelne Gleitlagerpads (24) umfasst, welche über den Umfang verteilt angeordnet sind wobei je Gleitlagerpad (24) ein Lagerspieleinstellmittel (28) ausgebildet ist, mittels welchem das Lagerspiel (31) jedes einzelnen Gleitlagerpads (24) einstellbar ist.

3. Gondel (2) nach einem der vorhergehenden Ansprüche, **dadurch gekennzeichnet, dass** das Lagerspieleinstellmittel (28) mit einem Lagerspieleinstellaktor (32) gekoppelt ist, mittels welchem das Lagerspiel (31) automatisiert einstellbar ist.

4. Gondel (2) nach einem der vorhergehenden Ansprüche, **dadurch gekennzeichnet, dass** ein Lagerspielerfassungsmittel (33) ausgebildet ist, mittels welchem das Lagerspiel (31) erfassbar ist.

5. Verfahren zum Betreiben einer Windkraftanlage (1), wobei eine Gondel (2) der Windkraftanlage (1) eine Rotorlagerung (8) mit zumindest einem inneren Ringelement (12) und zumindest einem äußeren Ringelement (13) aufweist, wobei zwischen den beiden Ringelementen (12, 13) ein erstes Gleitlagerelement (14) und ein zweites Gleitlagerelement (15) angeordnet sind, wobei beim Zusammenbau der Rotorlagerung (8) ein Lagerspiel (31) zwischen dem Gleitlagerelement (14, 15) und dem damit zusammenwirkenden Ringelement (12, 13) mittels eines Lagerspieleinstellmittels (28) eingestellt wird, wobei sowohl das innere Ringelement (12) als auch das äußere Ringelement (13) V-förmig ausgebildet sind und das erste Gleitlagerelement (14) und das zweite Gleitlagerelement (15) zwischen den beiden Ringelementen (12, 13) axial zueinander beabstandet angeordnet werden, wobei die beiden Gleitlagerelemente (14, 15) im Querschnitt gesehen in einem Winkel (17) zueinander angeordnet werden, wobei das Ringelement (12, 13) axial in ein erstes Ringelementteil (26) und ein zweites Ringelementteil (27) geteilt ausgebildet ist,
**dadurch gekennzeichnet, dass** das erste Ringelementteil (26) und das zweite Ringelementteil (27) mittels dem Lagerspieleinstellmittel (28) in Axialrichtung (25) relativ zueinander verschoben werden, wobei das Lagerspieleinstellmittel (28) ein Federelement (34) und eine Wellenmutter (29) umfasst, mittels welchem das erste Ringelementteil (26) und das zweite Ringelementteil (27) in Axialrichtung relativ zueinander verschoben werden, wobei das Federelement (34) zwischen der Wellenmutter (29) und dem ersten Ringelementteil (26) angeordnet ist.

6. Verfahren nach Anspruch 5, **dadurch gekennzeichnet, dass** das Lagerspiel (31) mittels eines Lagerspielerfassungsmittels (33) erfasst wird, wobei bei Erreichen eines bestimmten Lagerspielwertes ein Lagerspieleinstellmittel (28) automatisiert das Lagerspiel (31) nachstellt.

7. Verfahren nach Anspruch 5 oder 6, **dadurch gekennzeichnet, dass** das Lagerspiel (31) mittels eines Lagerspielerfassungsmittels (33) erfasst wird, wobei bei Erreichen eines bestimmten Lagerspielwertes ein Wartungssignal ausgegeben wird.

## Claims

1. A nacelle (2) for a wind turbine (1), the nacelle (2) comprising:
- a nacelle housing (4);
- a rotor hub (6);
- a rotor bearing (8) for bearing the rotor hub (6) on the nacelle housing (4), wherein the rotor bearing (8) has at least one inner ring element (12) and at least one outer ring element (13), wherein a first sliding bearing element (14) and a second sliding bearing element (15) are arranged between the two ring elements (12, 13),
wherein a bearing clearance adjusting means (28) is formed, by means of which a bearing clearance (31) between the sliding bearing element (14, 15) and the cooperating ring element (12, 13) may be adjusted, wherein both the inner ring element (12) and the outer ring element (13) are designed to be V-shaped and the first sliding bearing element (14) and the second sliding bearing element (15) are arranged between the two ring elements (12, 13) being axially spaced apart from one another, wherein the two sliding bearing elements (14, 15) are arranged at an angle (17) with respect to one another as seen in cross-section, wherein the ring element (12, 13) is designed to be divided into a first ring element part (26) and a second ring element part (27), **characterized in that** the first ring element part (26) and the second ring element part (27) are displaceable relative to one another in the axial direction (25) by means of the bearing clearance adjusting means (28), wherein the bearing clearance adjusting means (28) comprises a spring element (34) and a shaft nut (29), by means of which the first ring element part (26) and the second ring element part (27) are displaceable relative to one another in the axial direction, wherein the spring element (34) is arranged between the shaft nut (29) and the first ring element part (26).

2. The nacelle (2) according to claim 1, **characterized in that** the sliding bearing element (14, 15) comprises multiple individual sliding bearing pads (24) which are arranged so as to be distributed across the circumference, wherein one bearing clearance adjusting means (28), by means of which the bearing clearance (31) of each individual sliding bearing pad (24) can be adjusted, is formed per sliding bearing pad (24).

3. The nacelle (2) according to one of the preceding claims, **characterized in that** the bearing clearance adjusting means (28) is coupled with a bearing clearance adjusting actuator (32), by means of which the bearing clearance (31) may be adjusted automatically.

4. The nacelle (2) according to one of the preceding claims, **characterized in that** a bearing clearance detection means (33) is formed, by means of which the bearing clearance (31) may be detected.

5. A method for operating a wind turbine (1), wherein a nacelle (2) of the wind turbine (1) comprises a rotor bearing (8) having at least one inner ring element (12) and at least one outer ring element (13), wherein a first sliding bearing element (14) and a second sliding bearing element (15) are arranged between the two ring elements (12, 13), wherein when the rotor bearing (8) is assembled, a bearing clearance (31) between the sliding bearing element (14, 15) and the cooperating ring element (12, 13) is set by means of a bearing clearance adjusting means (28), wherein both the inner ring element (12) and the outer ring element (13) are designed to be V-shaped and the first sliding bearing element (14) and the second sliding bearing element (15) are arranged between the two ring elements (12, 13) being axially spaced apart from one another, wherein the two sliding bearing elements (14, 15) are arranged at an angle (17) with respect to one another as seen in cross-section, wherein the ring element (12, 13) is designed to be divided into a first ring element part (26) and a second ring element part (27), **characterized in that** the first ring element part (26) and the second ring element part (27) are displaceable relative to one another in the axial direction (25) by means of the bearing clearance adjusting means (28), wherein the bearing clearance adjusting means (28) comprises a spring element (34) and a shaft nut (29), by means of which the first ring element part (26) and the second ring element part (27) are displaceable relative to one another in the axial direction, wherein the spring element (34) is arranged between the shaft nut (29) and the first ring element part (26).

6. The method according to claim 5, **characterized in that** the bearing clearance (31) is detected by means of a bearing clearance detection means (33), wherein when a certain bearing clearance value is reached, a bearing clearance adjusting means (28) automatically adjusts the bearing clearance (31).

7. The method according to claim 5 or 6, **characterized in that** the bearing clearance (31) is detected by means of a bearing clearance detection means (33), wherein when a certain bearing clearance value is reached, a maintenance signal is output.

## Revendications

1. Nacelle (1) pour une éolienne (1), cette nacelle (2) comprenant :
- un boîtier de nacelle (4) ;
- un moyeu de rotor (6) ;
- un palier de rotor (8) pour le logement du moyeu de rotor (6) au niveau du boîtier de nacelle (4), dans lequel le palier de rotor (8) comprend au moins un élément annulaire interne (12) et au moins un élément annulaire externe (13), dans lequel, entre les deux éléments annulaires (12, 13), sont disposés un premier élément de palier lisse (14) et un deuxième élément de palier lisse (15),
dans lequel un moyen de réglage du jeu de palier (28) est prévu, au moyen duquel un jeu de palier (31) entre l'élément de palier lisse (14, 15) et l'élément annulaire (12, 13) interagissant avec celui-ci peut être réglé, dans lequel aussi bien l'élément annulaire interne (12) que l'élément annulaire externe (13) présentent une forme de V et le premier élément de palier lisse (14) et le deuxième élément de palier lisse (15) sont disposés de manière distante axialement entre les deux éléments annulaires (12, 13), dans lequel les deux éléments de palier lisse (14, 15) sont disposés, vus en section transversale, avec un angle (17) entre eux, dans lequel l'élément annulaire (12, 13) est réalisé de façon à être divisé axialement en une première partie d'élément annulaire (26) et une deuxième partie d'élément annulaire (27), **caractérisé en ce que** la première partie d'élément annulaire (26) et la deuxième partie d'élément annulaire (27) sont coulissantes l'une par rapport à l'autre dans la direction axiale (25) grâce au moyen de réglage de jeu de palier (28), dans lequel le moyen de réglage de jeu de palier (28) comprend un élément de ressort (34) et un écrou d'arbre (29) au moyen duquel la première partie d'élément annulaire (26) et la deuxième partie d'élément annulaire (27) sont coulissantes l'une par rapport à l'autre dans la direction axiale, dans lequel l'élément de ressort (34) est disposé entre l'écrou d'arbre (29) et la première partie d'élément annulaire (26).

2. Nacelle (2) selon la revendication 1, **caractérisé en ce que** l'élément de palier lisse (14, 15) comprend plusieurs patins de palier lisse (24) individuels, qui sont disposés de manière répartie sur la circonférence, dans lequel chaque patin de palier lisse (24) comprend un moyen de réglage de jeu de palier (28) au moyen duquel le jeu de palier (31) de chaque patin de palier lisse (24) individuel peut être réglé.

3. Nacelle (2) selon l'une des revendications précédentes, **caractérisé en ce que** le moyen de réglage de jeu de palier (28) est couplé avec un actionneur de réglage de jeu de palier (32), au moyen duquel le jeu de palier (31) peut être réglé automatiquement.

4. Nacelle (2) selon l'une des revendications précédentes, **caractérisé en ce que** le moyen de mesure de jeu de palier (33) est prévu, au moyen duquel le jeu de palier (31) peut être mesuré.

5. Procédé de fonctionnement d'une éolienne (1), dans lequel une nacelle (2) de l'éolienne (1) comprend un palier de rotor (8) avec au moins un élément annulaire interne (12) et au moins un élément annulaire externe (13), dans lequel, entre les deux éléments annulaires (12, 13), sont disposés un premier élément de palier lisse (14) et un deuxième élément de palier lisse (15), dans lequel, lors de l'assemblage du palier de rotor (8), un jeu de palier (31) entre l'élément de palier lisse (14, 15) et l'élément annulaire (12, 13) interagissant avec celui-ci est réglé à l'aide d'un moyen de réglage de jeu de palier (28), dans lequel aussi bien l'élément annulaire interne (12) que l'élément annulaire externe (13) présentent une forme de V et le premier élément de palier lisse (14) et le deuxième élément de palier lisse (15) sont disposés de manière distante axialement entre les deux éléments annulaires (12, 13), dans lequel les deux éléments de palier lisse (14, 15) sont disposés, vus en section transversale, avec un angle (17) entre eux, dans lequel l'élément annulaire (12, 13) est réalisé de façon à être divisé axialement en une première partie d'élément annulaire (26) et une deuxième partie d'élément annulaire (27), **caractérisé en ce que** la première partie d'élément annulaire (26) et la deuxième partie d'élément annulaire (27) sont coulissantes l'une par rapport à l'autre dans la direction axiale (25) grâce au moyen de réglage de jeu de palier (28), dans lequel le moyen de réglage de jeu de palier (28) comprend un élément de ressort (34) et un écrou d'arbre (29) au moyen duquel la première partie d'élément annulaire (26) et la deuxième partie d'élément annulaire (27) sont coulissantes l'une par rapport à l'autre dans la direction axiale, dans lequel l'élément de ressort (34) est disposé entre l'écrou d'arbre (29) et la première partie d'élément annulaire (26).

6. Procédé selon la revendication 5, **caractérisé en ce que** le jeu de palier (31) est mesuré avec un moyeu de mesure du jeu de palier (33), dans lequel, lorsque la valeur du jeu de palier déterminé est atteinte, un moyen de réglage de jeu de palier (28) ajuste de manière automatisée le jeu de palier (31).

7. Procédé selon la revendication 5 ou 6, **caractérisé en ce que** le jeu de palier (31) est mesuré à l'aide d'un moyen de mesure de jeu de palier (33), dans lequel, lorsqu'une valeur de jeu de palier déterminée est atteinte, un signal de maintenance est émis.
